(19) Europäisches Patentamt / European Patent Office / Office européen des brevets

(11) **EP 3 168 794 A1**

(12) **EUROPEAN PATENT APPLICATION**
published in accordance with Art. 153(4) EPC

(43) Date of publication:
**17.05.2017 Bulletin 2017/20**

(21) Application number: **15891034.9**

(22) Date of filing: **21.08.2015**

(51) Int Cl.:
*G06Q 10/00* (2012.01)

(86) International application number:
**PCT/CN2015/087804**

(87) International publication number:
**WO 2017/031633 (02.03.2017 Gazette 2017/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Boao Zongheng Network Technology
Co., Ltd
Guangzhou City, Guangdong 510620 (CN)**

(72) Inventor: **XIE, Xuhui
Guangzhou
Guangdong 510620 (CN)**

(74) Representative: **Sun, Yiming
HUASUN Patent- und Rechtsanwälte
Friedrichstraße 33
80801 München (DE)**

(54) **BRAND VALUE EVALUATION METHOD AND SYSTEM**

(57) A method for trademark value assessment and a system thereof; the method and the system obtain the trademark cost, the trademark combination coefficient, the trademark class coefficient, the trademark application duration, the trademark publicity expense and the publicity duration of the trademark to be assessed, and select different formula to calculate the trademark value with a simple system and a quick method, so that the trademark holders or purchasers can have a preliminary positioning of the trademark value quickly, thus, the prosperity of the trademark market may be promoted and the awareness of self-owned brand may be enhanced.

S1: Obtaining a trademark cost, a trademark combination coefficient, a trademark class coefficient, a trademark application duration and a publicity condition of the trademark to be assessed

Publicized

Unpublicized

S2: Calculating the trademark value with an assessment method for trademark of Class I based on the obtained parameters;

S3: Further obtaining a trademark publicity expense and publicity duration and calculating the trademark value with an assessment method for trademark of Class II based on the obtained parameters.

Fig. 1

## Description

## Technical Field

The Invention relates to the value assessment of trademarks, and particularly to a method for trademark value assessment and a system thereof.

## Background Art

Trademark values are accepted by more and more people and the transactions of trademark are more frequent with the development of economy. However, with complicated process, the traditional method for trademark value assessment is usually influenced by too many subjective factors and so much attention is paid to the added value of the trademark; therefore, trademark holder or purchaser is unable to objectively understand or position the basic value of the trademark quickly. The Invention integrates the trademark cost, the trademark combination type, the trademark class, the trademark application duration, the publicity expense and the publicity duration to assess the basic value of the trademark comprehensively without being influenced by the added value excessively; thus, the invention can promote the prosperity of the trademark market and indirectly enhance the awareness of self-owned brand.

## Summary of the Invention

To solve the above difficulties in trademark value assessment, the Invention provides a simple and quick assessment method and a system thereof so that the trademark holders or purchasers may have a preliminary positioning of the trademark value quickly; the technical schemes are as follows:

A method for trademark value assessment, comprising the following steps:

S1: Obtaining a trademark cost, a trademark combination coefficient, a trademark class coefficient, a trademark application duration and a publicity condition of the trademark to be assessed; entering Step S2 in case the trademark is unpublicized and entering Step S3 in case the trademark is publicized;

S2: Calculating the trademark value with an assessment method for trademark of Class I based on the obtained parameters;

S3: Further obtaining a trademark publicity expense and a publicity duration and calculating the trademark value with an assessment method for trademark of Class II based on the obtained parameters.

Further, the calculation formula of the assessment method for trademark of Class I in Step S2 is:

$$P=X*(1+t_1)^M*g*e;$$

wherein, P is the trademark value; X is the trademark cost; $t_1$ is the basic annual interest rate; M is the trademark application duration; g is the trademark combination coefficient and e is the trademark class coefficient.

Further, the calculation formula of the assessment method for trademark of Class II in Step S3 is:

$$P=X*(1+t_1)^M*g*e+Y*(1+t_1)^{j/2};$$

wherein, P is the trademark value; X is the trademark cost; $t_1$ is the basic annual interest rate; M is the trademark application duration; g is the trademark combination coefficient, e is the trademark class coefficient; Y is the trademark publicity expense and j is the publicity duration.

Further, the trademark cost at least comprises one of a trademark design expense, a trademark application expense and an expense for review of refused trademark.

Further, the trademark publicity expense at least comprises one of a trademark advertising expense and a consumptive expense for trademark printing products, etc.

Further, the calculation formula of the trademark class coefficient is:

$$e=(1-t_2^N)/(1-t_2);$$

wherein, e is a trademark class coefficient; N is a number of categories of trademark registration and $t_2$ is a constant factor and $0<t_2<1$.

Further, the calculation method of the trademark application duration is:

taking $p_1$ and $p_0$ as the current year and the application year respectively; taking $q_1$ and $q_0$ as the current month and the application month respectively; taking $s_1$ and $S_0$ as the current date and the application date respectively;

when $q_1 > q_0$, or $q_1 = q_0$, but $S_1 \geq S_0$, the trademark application duration $M = p_1 - p_0$;

when $q_1 < q_0$, or $q_1 = q_0$, but $s_1 < S_0$, the trademark application duration $M = p_1 - p_0 - 1$;

further, the trademark combination coefficient is determined by the type of the trademark combination; different combination type has different trademark combination coefficient.

On the other hand, the Application further discloses a system for using in any of the above items of trademark value assessment:

> The trademark value assessment system comprises a data input module, a judgment module, a data operation module and a display module;

> the data input module is used for reading the data inputted by users and sending it to the data operation module;

> the judgment module is used for judging whether the trademark is publicized;

> the data operation module is used for calculating the inputted data with different methods for trademark value assessment according to the judgment of the judgment module and figuring out the trademark value ;

> the display module is used for displaying the trademark value to users.

Further, the numerical value inputted by users in the relevant column of the trademark publicity expense is the basis of the judgment module for judging whether the trademark is publicized.

Further, the judgment module may inform the display module to present different data input module to users according to users' selection, so that other parameters may be further inputted.

The Invention may decrease the distraction of the added value of the trademark and calculate the trademark's intrinsic value quickly; thus, trademark holders or purchasers may have a preliminary assessment about the value of the trademark, especially of the newly applied trademark.

**Brief Description of the Drawings**

In order to illustrate the technical schemes in the embodiments of the Invention or in prior art more clearly, the drawings required in description of the embodiments or prior art will be introduced briefly as follows. Obviously, the drawings described below are just a part of the embodiments of the Invention. A person skilled in the art is able to obtain other drawings according to these drawings without any creative work.

> Figure 1 is a method schematic diagram of the preferred embodiments of the Invention;

> Figure 2 is a system schematic diagram of the preferred embodiments of the Invention;

**Detailed Description of the Preferred Embodiments**

A clear and full description of the technical schemes of the embodiments of the Invention will be given in combination of the drawings of the embodiments of the Invention as follows. Obviously, the described embodiments are just a part rather than the whole of the embodiments of the Invention. Based on the embodiments of the Invention, any other embodiments obtained by a person skilled in the art without any creative work will fall within the protection scope of the Invention.

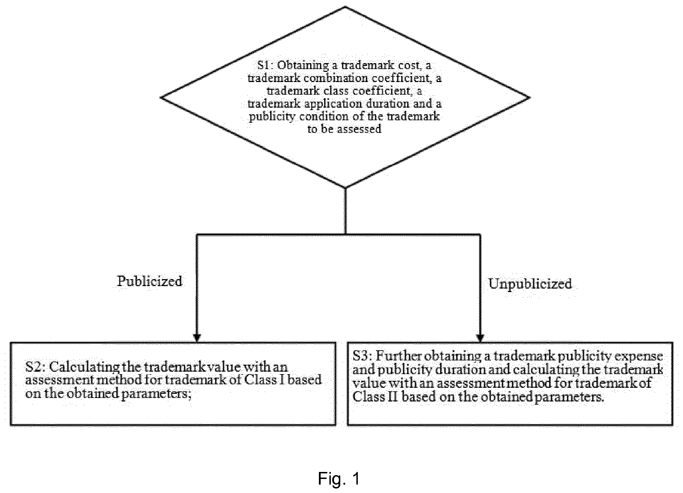

The method for trademark value assessment as shown in Fig. 1 is as follows:

> S1: Obtaining a trademark cost X, a trademark combination coefficient g, a trademark class coefficient e and an application duration M of the trademark to be assessed and the publicity condition of the trademark.

Wherein, the trademark cost X at least comprises one of a trademark design expense a, a trademark application expense b and an expense for review of a refused trademark c. In the embodiment, trademark cost X = design expense a + trademark application expense b + expense for review of the refused trademark c; in other embodiments, the trademark cost X may include other expenses besides the trademark design expense a, the trademark application expense b and the expense for review of the refused trademark c.

The trademark combination coefficient g is determined by the type of the trademark combination; different combination type has different trademark combination coefficient. In the embodiment, when the trademark is a form of any of Chinese words, English words and figures, the trademark combination coefficient g=1; when the trademark is a combination of any two of Chinese words, English words and figures, the trademark combination coefficient g=1.2; when the trademark is a combination of the three of Chinese words, English words and figures, the trademark combination coefficient g=1.5; in other embodiments, the trademark combination coefficient g may be other proper numerical value; when the trademark is a combination of any two of Chinese words, English words and figures, the trademark combination coefficient g can be different numerical values based on its combination of Chinese words and English words, or of Chinese words and figures, or of English words and figures.

The calculation formula of the trademark class coefficient e is $e=(1-t_2^N)/(1-t_2)$; wherein, N is a number of categories of trademark registration; $t_2$ is a constant factor and $0<t_2<1$. The number of categories of trademark registration N is determined by whether the trademark is of "multiple categories for one trademark" or "a category for one trademark"; multiple categories for one trademark refers to one same trademark is applied for registration with regard to multiple classes of goods and service items in one application of trademark registration. In the embodiment, the constant factor $t_2$ equals 0.9; in other embodiments, the constant factor $t_2$ may be other

numerical values as per requirements only if $0<t_2<1$.

The calculation method of the trademark application duration is: taking $p_1$ and $p_0$ as the current year and the application year respectively; taking $q_1$ and $q_0$ as the current month and the application month respectively; taking $s_1$ and $S_0$ as the current date and the application date respectively;

when $q_1> q_0$, or $q_1= q_0$, but $S_1\geq S_0$, the trademark application duration $M = p_1- p_0$;

when $q_1< q_0$, or $q_1= q_0$, but $s_1< s_0$, the trademark application duration $M=p_1- p_0-1$;

In other embodiments, the trademark application duration M does not have to be a specific date and only the month and the year need to be compared.

Entering Step S2 in case the trademark is unpublicized; calculating the trademark value P with the assessment method for trademark of Class I based on the obtained trademark cost X, trademark combination coefficient g, trademark class coefficient e and application duration M of the trademark to be assessed;

The calculation formula of the assessment method for trademark of Class I is $P=X*(1+t_1)^M*g*e$; wherein, $t_1$ is the basic annual interest rate; in the embodiment, $t_1$ equals 0.0325; in other embodiments, the basic annual interest rate $t_1$ may be other proper values according to the interest rate of the bank.

Entering Step S3 in case the trademark is publicized; filling the trademark publicity expense Y and the publicity duration j, and then calculating the trademark value with the assessment method for trademark of Class II based on the obtained trademark cost X, trademark combination coefficient g, trademark class coefficient e, application duration M, publicity expense Y and publicity duration j of the trademark to be assessed.

The trademark publicity expense Y at least comprises one of the trademark advertising expense h and the consumptive expense for trademark printing products i, etc. In the embodiment, trademark publicity expense Y= trademark advertising expense h+ consumptive expense for trademark printing products i; the trademark publicity expense Y may include other costs besides the trademark advertising expense h and the consumptive expense for trademark printing products i.

The calculation formula of the assessment method for trademark of Class II is $P=X*(1+t_1)^M*g*e+Y*(1+t_1)^{j/2}$; wherein, X is the trademark cost; $t_1$ is the basic annual interest rate; M is the trademark application duration; g is the trademark combination coefficient, e is the trademark class coefficient; Y is the trademark publicity expense and j is the publicity duration. The publicity duration j is inputted by users with the unit of year.

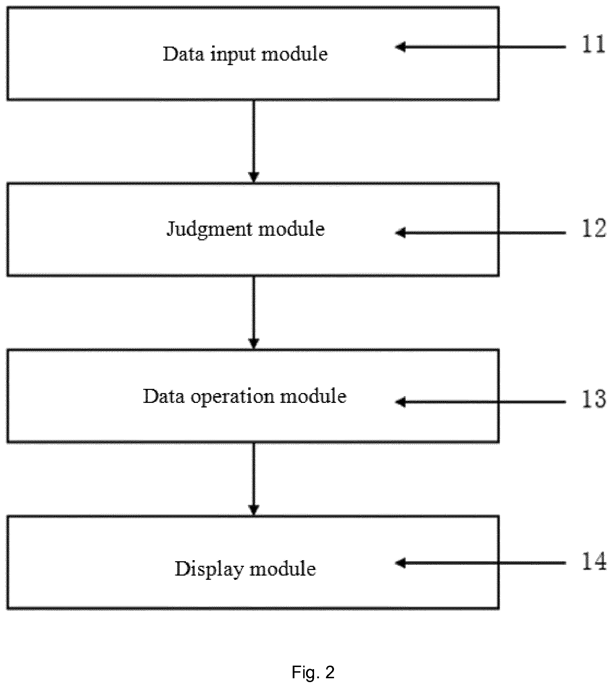

The system for trademark value assessment as shown in Fig. 2 is as follows:

The trademark value assessment system comprises a data input module 11, a judgment module 12, a data operation module 13 and a display module 14;

The data input module 11 is used for reading the data inputted by users and sending it to the data operation module 13; in the embodiment, the data inputted by the data input module 11 comprises the trademark cost X, trademark combination coefficient g, trademark class coefficient e, the trademark application duration M, the trademark publicity expense Y and the publicity duration j of the trademark to be assessed. The trademark combination coefficient g is calculated in the system background automatically according to the specific type of the trademark selected by users. The trademark class coefficient e refers to the number of the registered categories of the trademark inputted by users. The trademark application duration M is calculated according to the current date in the background after the users input the trademark application date in a calendar selection interface.

The judgment module 12 is used for judging whether the trademark is publicized. The numerical value inputted by users in the relevant column of the trademark publicity expense Y is the basis of the judgment module 12 for judging whether the trademark is publicized. When the trademark selected by users is a combined trademark, the judgment module 12 may inform the display module 14 to present different data input module 11 to users according to users' selection, so that a specific combination type of the trademark may be further inputted.

The data operation module 13 is used for calculating the inputted data with different methods for trademark value assessment according to the judgment of the judgment module 12 and figuring out the trademark value P by calculating the inputted data with the assessment method for trademark of Class I in case the trademark is unpublicized; in case the trademark is publicized, the inputted data shall be calculated with the assessment method for trademark of Class II to obtain the trademark value P;

the display module 14 is used for displaying the ultimate trademark value to users.

In Embodiment 1, the data input module 11 records that the inputted trademark design cost a=2000 yuan; the trademark application expense b=2000 yuan; the cost for review of refused trademark c=1000 yuan, the trademark combination type is of the combination of Chinese words, English words and figures (Chinese words, English words and figures combinations); the trademark class coefficient N=10; the trademark application date is 2010.03.20 (i.e., the trademark application year $p_0$=2010; the month $q_0$=03 and the date $s_0$=20).

Then, the trademark cost X=a+b+c=5000 yuan and the trademark combination coefficient g=1.5. In the embodiment, the constant factor $t_2$=0.9; therefore, the trademark class coefficient $e=(1-t_2^N)/(1-t_2)=$ $(1-0.9^{10})/(1-0.9)$ =6.513215599. Provided that the current date is 2015.03.25, then the current year $p_1$=2015; the month $q_1$=03 and the date $s_1$=25; because $q_1= q_0$ and $s_1\geq s_0$, then the trademark application duration M=

$p_1 - p_0 = 5$. The basic annual interest rate is defaulted as $t_1 = 3.25\%$.

The judgment module 12 automatically judges that the trademark is unpublicized according to the unfilled trademark publicity expense Y and the publicity duration j, and informs data operation module 13 to call the assessment formula for trademark of Class I and calculate the trademark value P; therefore, the trademark value $P= X*(1+t_1)^M*g*e=5000*(1+0.0325)^5*1.5*6.513215599 =57320.11$ yuan (it records 2 decimal places by default); then the display module 14 displays the trademark value P=57320.11 yuan to users.

In Embodiment 2, the data input module 11 records that the inputted trademark design cost a =2000 yuan; the trademark application expense b=2000 yuan; the expense for review of refused trademark c=1000 yuan, the trademark combination type is any one of Chinese words, English words and figures; the trademark class coefficient N=1; the trademark application date is 2010.03.20 (i.e., the trademark application year $p_0=2010$; the month $q_0=03$ and the date $s_0=20$); the trademark advertising expense h=5000 yuan; the consumptive expense for trademark printing products i=1000 yuan and the publicity duration j=6.

Then, the trademark cost X=a+b+c=5000 yuan and the trademark combination coefficient g=1. In the embodiment, the constant factor $t_2=0.9$; therefore, the trademark class coefficient $e=(1-t_2^N)/(1-t_2)= (1-0.9^1)/(1-0.9) =1$. Provided that the current date is 2015.02.15, then the current year $p_1=2015$; the month $q_1=02$ and the date $s_1=15$; because $q_1<q_0$, therefore the trademark application duration M= $p_1- p_0-1=4$. The basic annual interest rate is defaulted as $t_1=3.25\%$ and the trademark publicity cost Y=h+i=6000 yuan.

The judgment module 12 automatically judges that the trademark is unpublicized according the filled trademark publicity expense Y and the publicity duration j, and informs data operation module 13 to call the assessment formula for trademark of Class II and calculate the trademark value P; therefore, the trademark value P= $X*(1+t_1)^M*g*e+ Y*(1+t_1)^{j/2}=5000*(1+0.0325)^4*1*1 +6000*(1+0.0325)^{6/2}=12286.60$ yuan (it records 2 decimal places by default); then the display module 14 displays the trademark value P=12286.60 yuan to users.

The above are the preferred embodiments rather than the limitations of the Invention. Any amendment, equivalent replacement and improvement made within the range of the spirit and rule of the Invention shall be included in the protection scope of the Invention.

**Claims**

1. A method for trademark value assessment, wherein, the method comprises the following steps:

   S1: Obtaining a trademark cost, a trademark combination coefficient, a trademark class coefficient, a trademark application duration and the publicity condition of the trademark to be assessed; entering Step S2 in case the trademark is unpublicized and entering Step S3 in case the trademark is publicized;

   S2: Calculating the trademark value with an assessment method for trademark of Class I based on the obtained parameters;

   S3: Further obtaining a trademark publicity expense and publicity duration and calculating the trademark value with an assessment method for trademark of Class II based on the obtained parameters.

2. The method for trademark value assessment according to Claim 1, wherein, the calculation formula of the assessment method for trademark of Class I in Step S2 is:

$$P=X*(1+t_1)^M*g*e;$$

   wherein, P is the trademark value; X is the trademark cost; $t_1$ is the basic annual interest rate; M is the trademark application duration; g is the trademark combination coefficient and e is the trademark class coefficient.

3. The method for trademark value assessment according to Claim 1, wherein, the calculation formula of the assessment method for trademark of Class II in Step S3 is:

$$P=X*(1+t_1)^M*g*e+Y*(1+t_1)^{j/2};$$

   wherein, P is the trademark value; X is the trademark cost; $t_1$ is the basic annual interest rate; M is the trademark application duration; g is the trademark combination coefficient, e is the trademark class coefficient; Y is the trademark publicity expense and j is the publicity duration.

4. The method for trademark value assessment according to Claim 1, wherein, the trademark cost at least comprises one of a trademark design cost, a trademark application expense and an expense for review of refused trademark.

5. The method for trademark value assessment according to Claim 1, wherein, the trademark publicity expense at least comprises one of a trademark advertising expense and a consumptive expense for trademark printing products.

6. The method for trademark value assessment according to Claim 1, wherein, the calculation formula of the trademark class coefficient is:

$$e=(1-t_2^N)/(1-t_2);$$

wherein, e is a trademark class coefficient; N is a number of categories of trademark registration and $t_2$ is a constant factor and $0<t_2<1$.

7. The method for trademark value assessment according to Claim 1, wherein, the calculation formula of the trademark application duration is:

taking $p_1$ and $p_0$ as the current year and the application year respectively; taking $q_1$ and $q_0$ as the current month and the application month respectively; taking $s_1$ and $S_0$ as the current date and the application date respectively;
when $q_1 > q_0$, or $q_1 = q_0$, but $s_1 \geq s_0$, the trademark application duration $M = p_1 - p_0$;
when $q_1 < q_0$, or $q_1 = q_0$, but $s_1 < s_0$, the trademark application duration $M = p_1 - p_0 - 1$.

8. A system for trademark value assessment according to any of Claims 1-7, wherein,
the trademark value assessment system comprises a data input module, a judgment module, a data operation module and a display module;
the data input module is used for reading the data inputted by users and sending it to the data operation module;
the judgment module is used for judging whether the trademark is publicized;
the data operation module is used for calculating the inputted data with different methods for trademark value assessment according to the judgment of the judgment module and figuring out the trademark value ;
the display module is used for displaying the trademark value to users.

9. The system for trademark value assessment according to Claim 8, wherein, the numerical value inputted by users in the relevant column of the trademark publicity expense is the basis of the judgment module for judging whether the trademark is publicized.

10. The system for trademark value assessment according to Claim 8, wherein, the judgment module may inform the display module to present different data input modules to users according to users' selection, so that other parameters may be further inputted.

S1: Obtaining a trademark cost, a trademark combination coefficient, a trademark class coefficient, a trademark application duration and a publicity condition of the trademark to be assessed

Publicized

Unpublicized

S2: Calculating the trademark value with an assessment method for trademark of Class I based on the obtained parameters;

S3: Further obtaining a trademark publicity expense and publicity duration and calculating the trademark value with an assessment method for trademark of Class II based on the obtained parameters.

Fig. 1

Data input module — 11

Judgment module — 12

Data operation module — 13

Display module — 14

Fig. 2

# INTERNATIONAL SEARCH REPORT

| International application No. |
| --- |
| **PCT/CN2015/087804** |

## A. CLASSIFICATION OF SUBJECT MATTER

G06Q 10/00 (2012.01) i

According to International Patent Classification (IPC) or to both national classification and IPC

## B. FIELDS SEARCHED

Minimum documentation searched (classification system followed by classification symbols)

G06Q 10/-

Documentation searched other than minimum documentation to the extent that such documents are included in the fields searched

Electronic data base consulted during the international search (name of data base and, where practicable, search terms used)

SIPOABS, DWPI, CNKI: rating, value, brand, logo, label, trademark, evaluate, estimate, assess, guesstimate, valve

## C. DOCUMENTS CONSIDERED TO BE RELEVANT

| Category* | Citation of document, with indication, where appropriate, of the relevant passages | Relevant to claim No. |
| --- | --- | --- |
| A | WO 2014207753 A1 (HEWLETT-PACKARD DEVELOPMENT COMPANY, L.P. et al.), 31 December 2014 (31.12.2014), the whole text of the description | 1-10 |
| A | CN 1714359 A (DENTSU INC.), 28 December 2005 (28.12.2005), the whole text of the description | 1-10 |
| A | CN 101971198 A (BRAND AFFINITY TECHNOLOGIES INC.), 09 February 2011 (09.02.2011), the whole text of the description | 1-10 |
| A | CN 1761969 A (INTELLECTUAL PROPERTY BANK CORP.; MASUYAMA, H.), 19 April 2006 (19.04.2006), the whole text of the description | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 May 2016 (11.05.2016) | **19 May 2016 (19.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YAO, Tianyu** Telephone No.: (86-10) **62412064** |
| --- | --- |

Form PCT/ISA/210 (second sheet) (July 2009)

**INTERNATIONAL SEARCH REPORT**
Information on patent family members

International application No.

**PCT/CN2015/087804**

| Patent Documents referred in the Report | Publication Date | Patent Family | Publication Date |
|---|---|---|---|
| WO 2014207753 A1 | 31 December 2014 | CN 105359181 A | 24 February 2016 |
| CN 1714359 A | 28 December 2005 | WO 2004055707 A1 | 01 July 2004 |
| | | AU 2002368458 A1 | 09 July 2004 |
| | | US 2006149614 A1 | 06 July 2006 |
| CN 101971198 A | 09 February 2011 | EP 2257919 A1 | 08 December 2010 |
| | | EA 201070931 A1 | 29 April 2011 |
| | | EP 2257919 A4 | 12 December 2012 |
| | | US 2009234691 A1 | 17 September 2009 |
| | | WO 2009099675 A1 | 13 August 2009 |
| | | JP 2011511384 A | 07 April 2011 |
| CN 1761969 A | 19 April 2006 | NZ 542473 A | 31 May 2007 |
| | | AU 2004221195 A1 | 30 September 2004 |
| | | KR 20050108406 A | 16 November 2005 |
| | | EP 1617360 A1 | 18 January 2006 |
| | | JP 4018718 B2 | 05 December 2007 |
| | | US 2006178963 A1 | 10 August 2006 |
| | | CA 2519344 A1 | 30 September 2004 |
| | | EP 1617360 A4 | 08 November 2006 |
| | | WO 2004084108 A1 | 30 September 2004 |

Form PCT/ISA/210 (patent family annex) (July 2009)